# EUROPEAN PATENT SPECIFICATION

(11) **EP 4 273 489 B1**
(45) Date of publication and mention of the grant of the patent: **12.03.2025**
(21) Application number: 22171241.7
(22) Date of filing: 03.05.2022
(51) Int. Cl.: F28D 1/03, F28D 1/053, F28F 1/02, F28F 9/16, B21C 37/08, B23K 1/00, B21D 53/02

(54) **A FLAT TUBE FOR A HEAT EXCHANGER**
FLACHRÖHRE FÜR EINEN WÄRMETAUSCHER
TUBE PLAT POUR ÉCHANGEUR DE CHALEUR

(43) Date of publication of application: 08.11.2023
(73) Proprietor: Valeo Klimasysteme GmbH, 96476 Bad Rodach (DE)
(72) Inventor: ASRI, Mohamed, Wolfsburg (DE)
(74) Representative: Valeo Systèmes Thermiques

(56) References cited:
- WO-A1-2012/131038
- WO-A2-2007/084984
- DE-A1- 102010 031 468
- DE-A1- 102016 207 319
- GB-A- 2 509 762

## Description

### FIELD OF THE INVENTION

The invention relates to a flat tube. In particular, the invention relates to a flat tube for a heat exchanger.

GB 2 509 762 A for instance discloses a flat tube according to the preamble of claim 1.

### BACKGROUND OF THE INVENTION

In general, heat exchangers conventionally comprise a core bundle of tubes and two collector tubes such as manifolds through which the ends of the tubes of the core bundle of tubes pass and which are capped by fluid distribution box covers. There may be inserts placed between the tubes of said core in order to improve the exchange of heat.

There are two main technologies employed in the manufacture of these tubes. Either extrusion, which gives rise to a high cost (specific dies for each type of tube), or bending, offering different advantages. In the latter distance, the tubes used are produced by bending a metal strip over on itself.

Heat exchanger tubes may be subjected to numerous stresses such as high-speed impact with an object (for example a stone chipping) coming from the external environment. Heat exchanger tubes are therefore subjected to external stresses.

They are also stressed from the inside by the flow of the fluid. Specifically, during operation, the tubes are subjected to thermal, pressure, expansion stresses. Sufficient material strength at tube level has to be guaranteed.

One known solution is to allow the tube to withstand such an impact in order to avoid any leak of fluid, or to withstand the internal stresses, by locally increasing the thickness of the wall of the tube in the case of an extruded tube.

However, in the case of a bent tube, the tube cannot be reinforced by simply increasing the thickness of material as it can in the case of an extruded tube.

As far as bent tubes go, there is, for example, a known solution whereby the open ends of the tube receive inserts increasing the thickness of material at terminal ends of the tube. A disadvantage lies in the fact that the inserts may impact flow through the tube, they are in fact additional components which require precise brazing, they increase overall cost of the heat exchanger and they do not guarantee robustness against internal stress.

Another known solution may be providing a gap between the tube legs and the bottom portion of the tube. The tube legs may be separated from the bottom portion of the tube mechanically after the tube is brazed. This requires special tooling, such as knifes which may get dull after many repetitions of this process. Further, the process itself requires a lot of precision, so that the tubes do not get damaged.

Thus, it would be desired to provide a solution which would overcome latter disadvantages or the solution which would provide alternative to known tube flexibility improvements. It is also desirable to provide a tube which would withstand internal stress, preferably without increasing the overall cost of the heat exchanger.

### SUMMARY OF THE INVENTION

The object of the invention is, among others flat tube for a heat exchanger for a flow of a fluid therein, the tube being formed by bending a sheet metal strip along its length, the metal strip comprising longitudinal edges, the flat tube further comprising: a first wall, a second wall parallel to the first wall, said walls being substantially flat, two complementary side wall portions joining said first and second walls together, wherein the first fall comprises a seam extending along the longitudinal axis of the flat tube so that juxtaposed longitudinal edges of the metal strip join together in parallel manner towards the second wall to form a closed profile of the tube, the seam comprises a first section and a second section arranged in series with respect to the first portion of the seam, the sections being spaced apart from the second wall and extending along the seam along the longitudinal axis of the flat tube, characterized in that the second wall comprises at least one deflection protruding towards the seam, so that the first section is in contact with the second wall whereas the second section remains spaced apart from the second wall.

Advantageously, the longitudinal edges are on the same level with respect to the surface of the second wall.

Advantageously, the flat tub comprises a first open end and second open end, wherein the second section is located in the vicinity of at least one of the open ends.

Advantageously, the deflection is in a form of a groove continuously extending along the seam, along the longitudinal axis of the flat tube, so that the terminal end of the groove being shifted furthest from the surface of the second wall is aligned at least with the first section.

Advantageously, the deflection is in a form of at least two bumps arranged in series along the longitudinal axis of the flat tube, so that the terminal end of each bump being shifted furthest form the surface of the second wall is aligned at least with the first section.

Advantageously, the longitudinal edges extend to at least half the distance between the first wall and the second wall, wherein said distance is measured between inner faces of the walls.

Advantageously, the longitudinal edges extend substantially by two thirds the distance between the first wall and the second wall.

Advantageously, the deflection extends to at least one fourth the distance between the first wall and the second wall, wherein said distance is measured between inner faces of the walls.

A method for providing a flat tube may consist of the steps of:
- providing a metal strip
- forming the deflection on the metal strip
- roll- forming of the metal strip to form a closed profile
- brazing the rolled metal strip.

A heat exchanger comprising at least one flat tube comprises:
- a first manifold,
- a second manifold, wherein the flat tube is configured to provide a fluidal communication between the manifolds.

Advantageously, the heat exchanger further comprises at least one secondary tube wherein the secondary tube comprises only the first section extending between the open ends thereof.

Advantageously, the manifolds comprise slots for receiving at least the flat tubes, wherein the second section extends through and beyond the outline of the slots on both of its sides.

Advantageously, the heat exchanger comprises at least one fin interlaced between any of the flat tubes or secondary tubes, wherein the second section extends from the slot at least to the outline delimited by the terminal end of the fin.

The flat tube allows to reduce the mechanical stress at desired location of the tube. The second section significantly increases the flexibility of the flat tube which allows it to withstand high pressure and temperature. Additionally, there is no tooling required such as knives, etc. to mechanically separate the legs from the wall. Further, it is possible to adjust the flow within the flat tube by setting the ratio between the deflection and the terminal portions of the metal strip. The heat exchangers comprising such flat tube are advantageous with respect to prior art solution, because its flat tubes are easy to manufacture, they do not require using additional components, and thus they are also inexpensive to produce.

### BRIEF DESCRITPTION OF DRAWINGS

Examples of the invention will be apparent from and described in detail with reference to the accompanying drawings, in which:
Fig. 1 shows a perspective view of prior art flat tube.
Fig. 2 shows a cross section of the flat tube of Fig.1.
Fig. 3 shows a perspective view of a flat tube comprising at least one deflection.
Fig. 4 shows a cross section of the flat tube of Fig.3 in a view perpendicular with respect to an axis of extension of the flat tube.
Fig. 5 shows a perspective view of a flat tube comprising at least one bump.
Fig. 6 shows a perspective view of a flat tube comprising at least one bump in a view perpendicular with respect to an axis of extension of the flat tube..
Fig. 7 shows a cross section of the flat tube with longitudinal edges in L- formation.
Fig. 8 shows a cross section of the flat tube with longitudinal edges in ram- formation.
Fig. 9 shows a perspective view of a heat exchanger comprising at least one flat tube.
Fig. 10 shows the cross section of a flat tube- manifold assembly.

### DETAILED DESCRIPTION OF EMBODIMENTS

The invention relates to a flat tube 1. The flat tube 1 may be adapted for operation in a heat exchanger 100 for a flow of a fluid therein. For example, the heat exchanger 100 may be a radiator and the fluid circulating therein may be a coolant. Other heat exchangers in which the flat tube 1 may be applied are also envisaged.

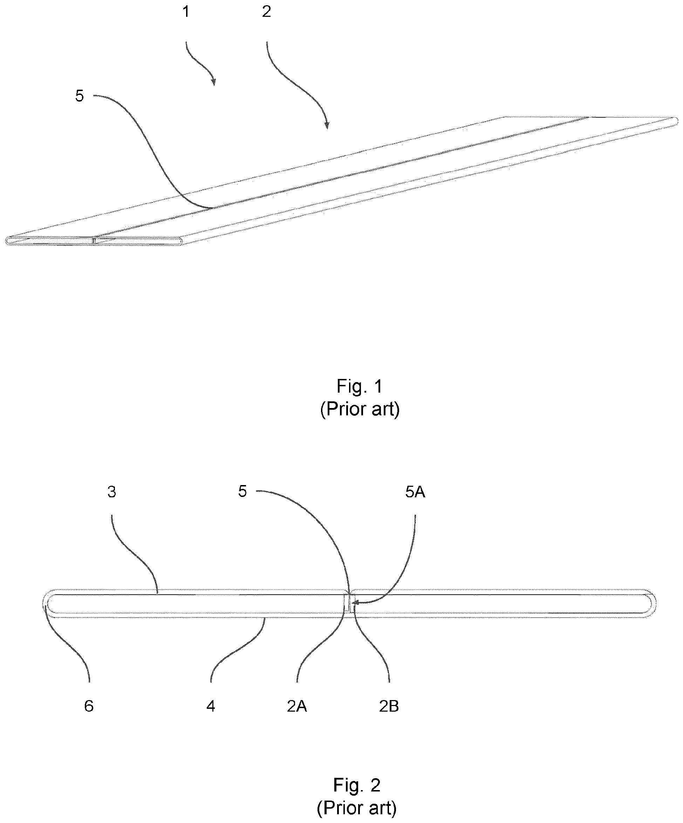

Figures 1 and 2 show the prior art flat tube 1. The flat tube 1 may be formed by bending a sheet metal strip 2 along its length. Term "metal strip" refers to a metallic sheet comprising two longer sides which may be further referred to as "longitudinal edges" and two substantially shorter sides, substantially parallel to said longer sides. The metal strip may be made of, for example, aluminum, yet other materials are also envisaged. The metal strip 2 may be bent along its longitudinal edges 2A, 2B to form a closed profile. Thus, the flat tube 1 may extend along its longitudinal axis. In other words, the flat tube 1 may comprise its axis of elongation.

The flat tube 1 may further comprise a first wall 3 and a second wall 4 parallel to the first wall 3, wherein said walls 3, 4 are formed after bending the metal strip 2. Said walls 3, 4 may be substantially flat. In order to form a closed profile, the flat tube 1 may further comprise two complementary side wall portions 6 joining said first and second walls 3, 4 together.

In order to provide a proper sealing of the flat tube 1, the first fall 3 may comprise a seam 5. The seam 5 may extend along the longitudinal axis of the flat tube 1 so that juxtaposed longitudinal edges 2A, 2B of the metal strip 2 join together in parallel manner towards the second wall 4 to form the closed profile of the tube 1. In other words, in the process of bending the metal strip 2 to form the flat tube 1, the longitudinal edges 2A, 2B are bent inwardly at substantially right angle, so that they protrude towards the second wall 4 and they are in contact with each other substantially from the first wall 3 to the second wall 4. The terminal ends of the longitudinal edges 2A, 2B are fixed for example, by brazing to the second wall 4. The metal strip 2 may also be brazed along the portion extending between the first wall 3 and the second wall 4, wherein the longitudinal edges 2A and 2B are substantially parallel and in contact with each other. Consequently, the seam 5 may comprise a first section 5A fixed to the second wall 4 and extending along the first portion of the seam 5 along the longitudinal axis of the flat tube 1.

The seam 5 may comprise the first section 5A fixed to the second wall 4 and extending along the first portion of the seam 5 along the longitudinal axis of the flat tube 1 allows the coolant to circulate within the heat exchanger 100 while providing efficient heat exchange between the coolant and different medium (e.g. air). However, known tubes tend to crack which may cause coolant leaks, especially in the vicinity of the terminal ends thereof. The cracks may be caused by lack of flexibility of the flat tube 1. Lack of flexibility combined with high pressure and temperature of the coolant may significantly reduce the robustness of the flat tube 1.

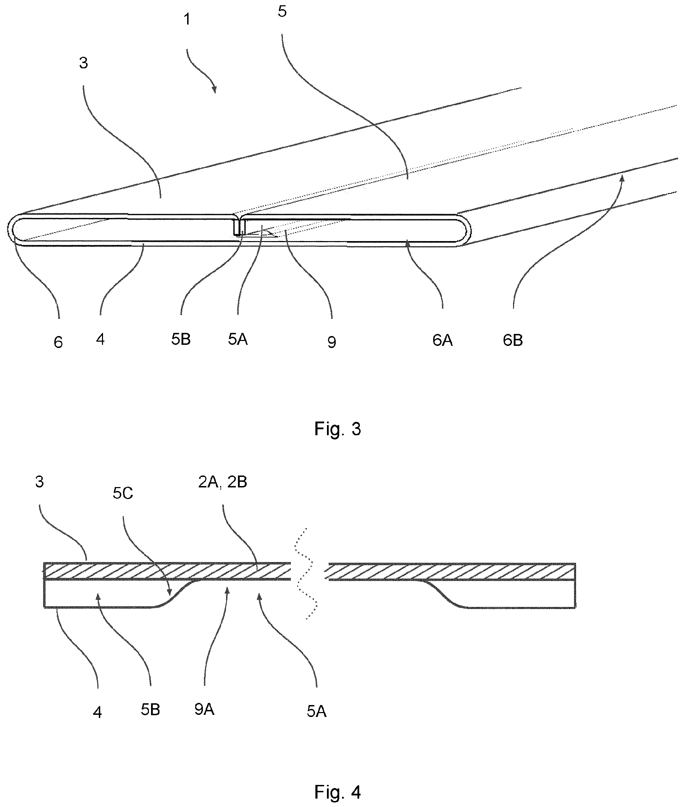

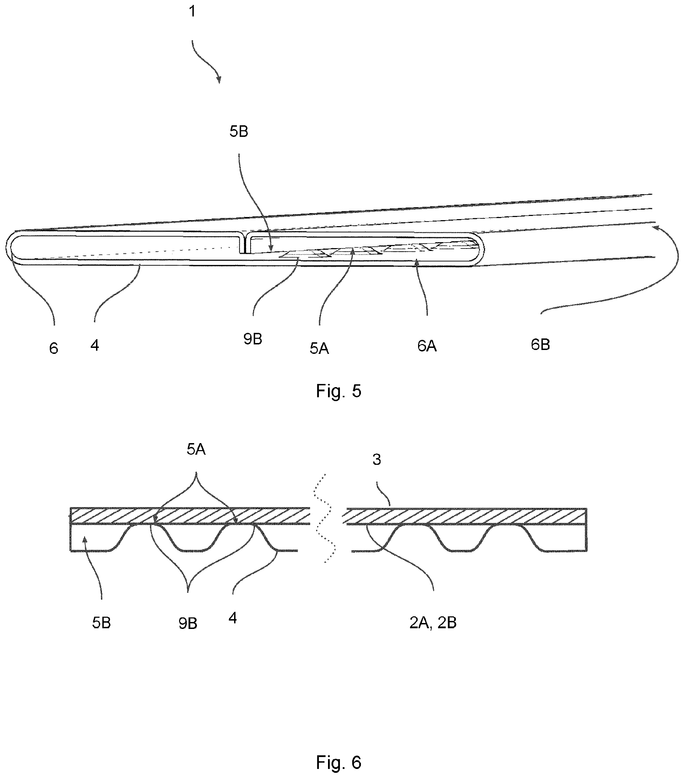

Figures 3-9 show an exemplary solutions which would allow to avoid or mitigate negative aspects of prior art flat tubes 1.

In order to increase overall robustness of the flat tube 1 and fluid- tightness thereof, that the seam 5 may comprise a second section 5B.

The second section 5B may increase the flexibility of the flat tube 1 where needed. The second section 5B may extend along the second portion of the seam 5 arranged in series with respect to the first portion of the seam 5 and along the longitudinal axis of the flat tube 1. Term "arranged in series" means that the second section 5B is located directly and subsequently to the first section 5A, or that second section 5B is located in the vicinity of the first section 5A whereas there may be another, optional section between them which allows a smooth transition between the first section 5A and the second section 5B.

Unlike the first section 5A, the second section 5B may be spaced from the second wall 4. More precisely, the second section 5B protrudes from the first wall 3 substantially towards the second wall 4, yet it does contact the second wall 4, whereas at least part of the first section 5A may be in contact with the second wall 4. It is to be understood that even if the first section 5A and the second section 5B are substantially one element, the first section 5A may be contacted with any means protruding, extending from or being attached to the second wall 4. This allows the flat tube 1 to be more flexible during its operational mode. It allows to compensate differences between the pressure and the temperature, so that the flat tube 1 keeps its structural integrity and fluid tightness at all times.

It is to be noted that the first section 5A and a second section 5B are arranged in series with respect to the first portion of the seam 5, the sections 5A, 5B are initially spaced apart from the second wall 4 and extending along the seam 5 along the longitudinal axis of the flat tube 1. The first section 5A is then brought into contact with the second wall 4 by means of a deformation 9 formed on the surface of the second wall 4.

An exemplary ways of providing the flat tube 1 comprising the second section 5B are discussed in further paragraphs.

In order to provide a sealed connection between the first wall 3 and the second wall 4, the second wall 4 comprises at least one deflection 9 protruding towards the seam 5, so that the first section 5A is in contact with the second wall 4 whereas the second section 5B remains spaced apart from the second wall 4. More precisely, it is the deflection 9 which allows the longitudinal edges 2A, 2B of the second section to be connected to the second wall 4, so that the seam 5 creates at least two separate channels for the fluid. The deflection 9 may be formed by punching already formed flat tube 1 so that longitudinal ends 2A, 2B and the second wall 4 are brought into contact. Alternatively, the deflection 9 may be formed right away on the unfolded strip of metal, i.e. before the flat tube 1 is formed. This way of providing the deflection 9 is preferred, as it reduces the risk of damaging the flat tube 1, in particular damaging the longitudinal ends 2A, 2B during punching.

The deflection 9 is in fact any structural deformation on the second wall 4 which allows at least a portion of the second wall 4 to be connected with the first wall 3. In one of the examples, the deflection 9 may be in a form of a groove 9A continuously extending along the seam 5, along the longitudinal axis of the flat tube 1, so that the terminal end of the groove 9A being shifted furthest from the surface of the second wall 4 is aligned at least with the first section 5A. The groove 9A may be understood as any recession in an outer face of the second wall 4 which comprises substantially even depth along its axis of elongation.

The deflection 9 may also be provided in a form of at least two bumps 9B arranged in series along the longitudinal axis of the flat tube 1, so that the terminal end of each bump 9B being shifted furthest form the surface of the second wall 4 is aligned at least with the first section 5A. The term "bump" refers to the deflections 9 which are not, unlike the grooves 9A, continuously extending along the seam 5, along the longitudinal axis of the flat tube 1. It means that there may be at least one bypass for the fluid between the subsequent bumps 9B. This allows to change the flow pattern of the fluid to increase the overall performance of the heat exchanger 100. It is to be noted that between the subsequent bumps 9B, the second wall 4 remains flat.

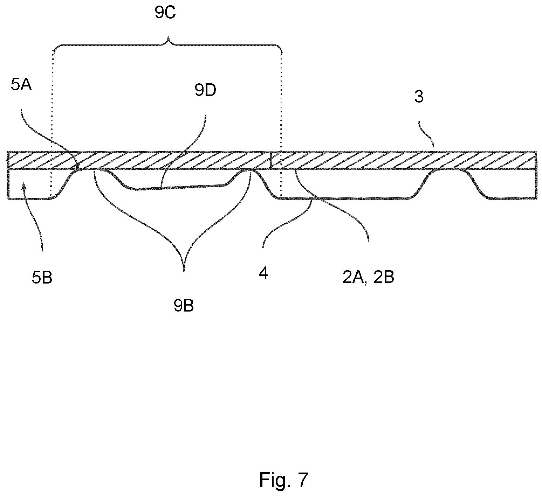

As shown in Fig. 7, the deflection 9 may also be provided in a form of at least one ridge 9C. The ridge 9C may comprise at least two bumps 9B connected via a hill 9D. The hill 9D is in fact a groove 9A which is not in contact with the longitudinal edges 2A, 2B of the seam 5. In other words, the hill 9D is formed by punching of the material in the same process as the groove 9A, yet its function is to partially reduce or control the fluid flow through the bypass section between the bumps 9B, not to close it completely. Further, the hill 9D may either be parallel with respect to the surface of the second wall 4, or it may be sloping in one direction. Further, the hill 9D may comprise two sections, each of them being located at different levels, relatively to the surface of the second wall 4. The exemplary configuration of such kind is shown in Fig. 7. This allows to further manipulate the flow in the bypass area between the bumps 9B.

The flat tube 1 may also comprise at least one dimple (not shown). The dimples are not shown for the sake of clarity of the drawings. The dimple may be in a form of an indent which is configured to change the flow pattern within the flat tube 1. The dimples may be formed on the first wall 3, the second wall 4 or on both walls 3, 4. Usually, the dimples are located along the first section 5A. However, the dimples formed along the second section 5B are also envisaged.

In the aforementioned way of providing the second section 5B may be located at the terminal end of the flat tube 1. In other words, the flat tube may comprise a first open end 6A and a second open end 6B located on the opposite side to the first open end 6A, with respect to the longitudinal axis of the flat tube 1. Consequently the second section 5B may located in the vicinity of at least one of the first open end 6A, the second open end 6A or both open ends 6A, 6B.

Alternatively, the second section 5B may be located, for example, in the middle of the flat tube 1 In other words, at least one second section 5B is located between at least two first sections 5A along the longitudinal axis of the flat tube 1. However, this configuration applies only in exceptional cases, wherein the flexibility of the flat tube 1 needs to be increased in desired portion. Usually, the flexibility of the flat tube 1 needs to be increased in the vicinity of the open ends 6A, 6B thereof.

The distance ratio between the distance occupied by the first section 5A and the deflection 9 is not limited. The ratio may be measured as a distance measured between inner faces of the walls 3, 4. The reference point for measuring said ratio may be the location of the connection point between the longitudinal edges 2A, 2B and the deflection 9.

It is thus needless to say that the other component occupies the remaining distance between the walls 3, 4.

In one of the examples, longitudinal edges 2A, 2B extend to at least half the distance between the first wall 3 and the second wall 4, wherein said distance is measured between inner faces of the walls 3, 4.

In other example, the longitudinal edges 2A, 2B may extend substantially by two thirds the distance between the first wall 3 and the second wall 4.

In other example, the deflection 9 may extend to at least one fourth the distance between the first wall 3 and the second wall 4, wherein said distance is measured between inner faces of the walls 3, 4.

The longitudinal edges 2A, 2B may point towards the second wall 4 so that they may be on the same level with respect to the surface of the second wall 4. In other words, the second section 5B may comprise two portions, both being at the same distance from the second wall 4. This configuration may be further described as I-formation. This configuration is shown in figures 3-6.

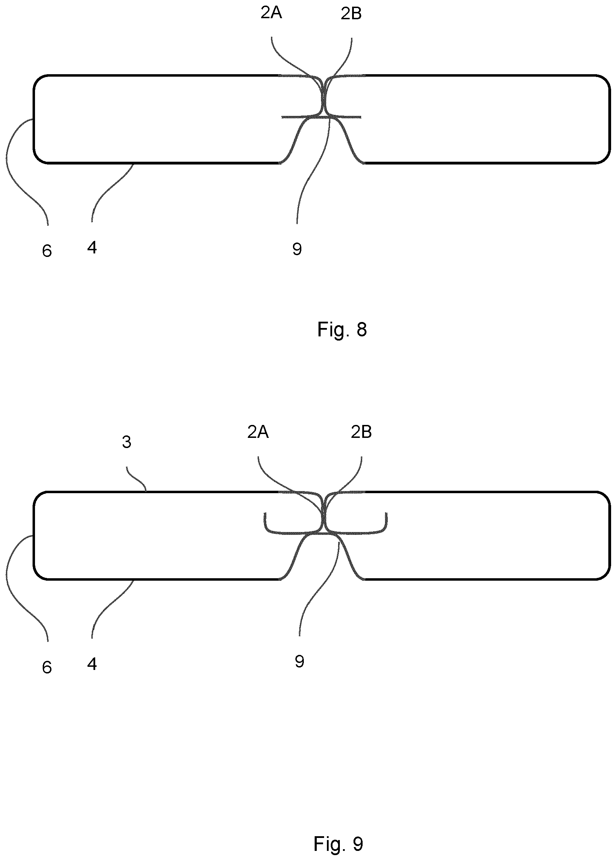

Alternatively, the longitudinal edges 2A, 2B may be bent, so that they point towards respective side walls 6. This configuration may further be described as L-formation. It is to be understood that the bent portions are still part of the longitudinal edges 2A, 2B. This configuration is shown in Fig. 8.

Alternatively, the longitudinal edges 2A, 2B may be bent twice, so that they are winded to point towards the first wall 3. This configuration may be further described as ram-formation. It is to be understood that the bent portions are still part of the longitudinal edges 2A, 2B. This configuration is shown in Fig. 9.

A method for providing a flat tube 1 may comprise few steps. One needs to provide a metal strip before production process. Due to relatively low cost and low weight, the preferred material may be an aluminum or aluminum alloy, yet other metallic materials are also envisaged.

The next step is forming a deflection 9 on the metal strip. The deflection 9 may be created by so-called punching of the metal strip with appropriate tool. Any other means of providing similar effect, i.e. deflection creation are also envisaged.

As mentioned before, punching of the metal strip to create deformation allows to minimize the risk of damaging the shape of the flat tube 1. Said deformation 9 may be formed after flat tube 1 forming, yet there is a risk of damaging the longitudinal walls 2A, 2B during the process.

Next, the metal strip may be rolled to form the flat tube 1. The edges of flat metal strip are folded in the same direction to create the longitudinal edges 2A,2B. Next, the side walls 6 are formed which allows to form the closed profile of the flat tube 1.

Finally, the flat tube 1 is brazed together. The deflection 9 is being fixed to the longitudinal edges 2A, 2B protruding from the first wall 3.

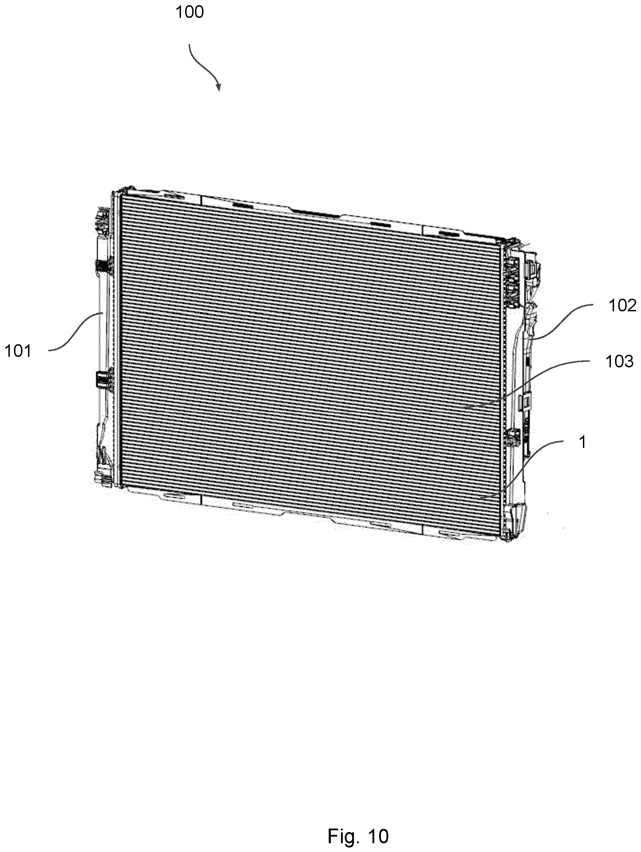

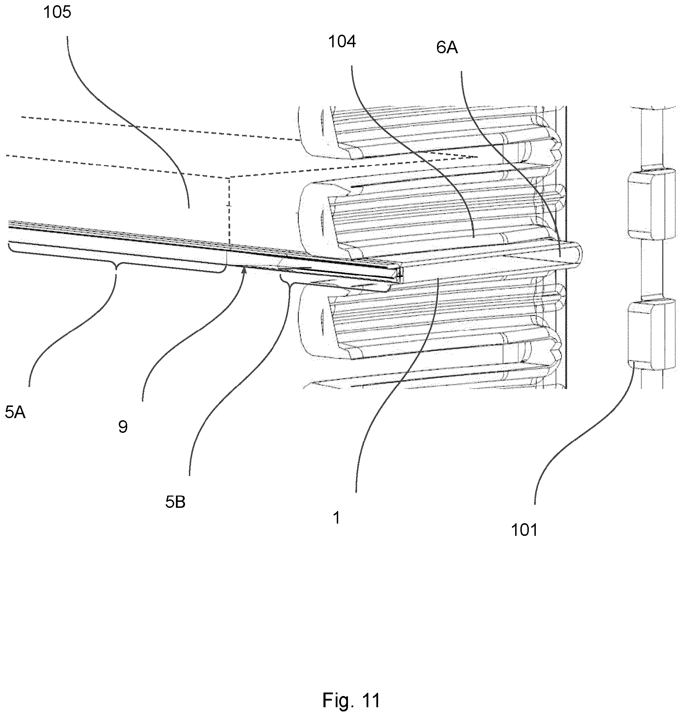

The flat tube 1 may be suitable for a heat exchanger 100. In other words, the heat exchanger 100 may comprise at least one flat tube 1 comprising at least one second section 5B. The exemplary heat exchanger 100 is shown in Figs 10 and 11.

Referring to Fig. 10, the heat exchanger 100 may comprise, inter alia, a first manifold 101 and a second manifold 102, wherein the flat tube 1 is configured to provide a fluidal communication between the manifolds 101, 102.

The heat exchanger 100 may further comprise at least one secondary tube 103, wherein the secondary tube 103 comprises only the first section 5A extending between the open ends thereof. In other words, the secondary tube 103 is a known, standard tube.

The heat exchanger 100 may comprise only flat tubes 1 stacked between the manifolds 101, 102.

Alternatively, the heat exchanger may comprise at least one flat tube 1 and at least one secondary tube 103. Both flat tubes 1 and the secondary tubes 103 may form at least one first set and at least one second set, respectively. The first and the second sets may be arranged in one stack of tubes. In one of the examples, the first set is located at least the terminal end of the stack. Alternatively, at least one first set may be located in-between two adjacent second stacks.

Referring to Fig. 11, the manifolds 101, 102 may comprise slots 104 for receiving the tubes 1, 103. In case the slot 104 received the flat tube 1, the second section 5B extends through and beyond the outline of the slots 104 on both of its sides. In other words, the second section 5B may extend from the open end 6A, 6B of the flat tube along the longitudinal axis of the flat tube 1 to the first section 5A which does not overlap the slot 104 in any case.

The heat exchanger 100 may also comprise fins 105 interlaced between any of the flat tubes 1 or secondary tubes 103, depending on the presence of the latter. The outline of the fins 105 is depicted in Fig. 12 by a dashed line, for the sake of clarity of the drawing. Anyway, it is preferred that the second section 5B extends from the open end 6A, 6B of the flat tube 1 at least to the outline delimited by the terminal end of the fin 105 at the adjacent terminal end thereof.

If the fins 105 are not present or if they cannot be regarded as the reference point, it is preferred that the second section 5B extents from 5mm to 25mm form the open end 6A, 6B, along the longitudinal axis of the flat tube 1.

Whilst other variations to the disclosed embodiments can be understood and effected by those skilled in the art in practicing the claimed invention, from a study of drawings, the disclosure, and the appended claims, the scope of protection is solely defined by the claims.

## Claims

1. A flat tube (1) for a heat exchanger (100) for a flow of a fluid therein, the tube (1) being formed by bending a sheet metal strip (2) along its length, the metal strip (2) comprising longitudinal edges (2A, 2B), the flat tube (1) further comprising: a first wall (3), a second wall (4) parallel to the first wall (3), said walls (3, 4) being substantially flat, two complementary side wall portions (6) joining said first and second walls (3, 4) together, wherein the first wall (3) comprises a seam (5) extending along the longitudinal axis of the flat tube (1) so that juxtaposed longitudinal edges (2A, 2B) of the metal strip (2) join together in parallel manner towards the second wall (4) to form a closed profile of the tube (1), the seam (5) comprises a first section (5A) and a second section (5B) arranged in series with respect to the first portion of the seam (5), the sections (5A, 5B) being spaced apart from the second wall (4) and extending along the seam (5) along the longitudinal axis of the flat tube (1), **characterized in that** the second wall (4) comprises at least one deflection (9) protruding towards the seam (5), so that the first section (5A) is in contact with the second wall (4) whereas the second section (5B) remains spaced apart from the second wall (4).

2. The flat tube (1) according to claim 1, wherein the longitudinal edges (2A, 2B) are on the same level with respect to the surface of the second wall (4).

3. The flat tube (1) according to any of the preceding claims, wherein the flat tube (1) comprises a first open end (6A) and second open end (6B), wherein the second section (5B) is located in the vicinity of at least one of the open ends (6A, 6B).

5. T

6. The flat tube (1) according to any of the preceding claims, wherein the deflection (9) is in a form of a groove (9A) continuously extending along the seam (5), along the longitudinal axis of the flat tube (1), so that the terminal end of the groove (9A) being shifted furthest from the surface of the second wall (4) is aligned at least with the first section (5A).

7. The flat tube (1) according to any of claims 1-4, wherein the deflection (9) is in a form of at least two bumps (9B) arranged in series along the longitudinal axis of the flat tube (1), so that the terminal end of each bump (9B) being shifted furthest form the surface of the second wall (4) is aligned at least with the first section (5A).

8. The flat tube (1) according to any of the preceding claims, wherein the longitudinal edges (2A, 2B) extend to at least half the distance between the first wall (3) and the second wall (4), wherein said distance is measured between inner faces of the walls (3, 4).

9. The flat tube (1) according to the preceding claim, wherein the longitudinal edges (2A, 2B) extend substantially by two thirds the distance between the first wall (3) and the second wall (4).

10. The flat tube (1) according to any of the preceding claims, wherein the deflection (9) extends to at least one fourth the distance between the first wall (3) and the second wall (4), wherein said distance is measured between inner faces of the walls (3, 4).

11. A method for providing a flat tube of claim 1 consisting of the steps of:
- providing a metal strip
- forming the deflection on the metal strip
- roll- forming of the metal strip to form a closed profile
- brazing the rolled metal strip.

12. A heat exchanger (100) comprising at least one flat tube (1) according to any of claims 1-9, the heat exchanger (100) further comprising:
- a first manifold (101),
- a second manifold (102), wherein the flat tube (1) is configured to provide a fluidal communication between the manifolds (101, 102).

13. The heat exchanger (100) according to claim 11, wherein the heat exchanger (100) further comprises at least one secondary tube (103) wherein the secondary tube (103) comprises only the first section (5A) extending between the open ends thereof.

14. The heat exchanger (100) according to any of claims 11-12, wherein the manifolds (101, 102) comprise slots (104) for receiving at least the flat tubes (1), wherein the second section (5B) extends through and beyond the outline of the slots (104) on both of its sides.

15. The heat exchanger (100) according to claims 11-13, wherein the heat exchanger (100) comprises at least one fin (105) interlaced between any of the flat tubes (1) or secondary tubes (103), wherein the second section (5B) extends from the slot (104) at least to the outline delimited by the terminal end of the fin (105).

## Patentansprüche

1. Flachröhre (1) für einen Wärmetauscher (100) für eine Strömung eines Fluids darin, wobei die Röhre (1) durch Biegen eines Blechstreifens (2) entlang seiner Länge gebildet wird, wobei der Metallstreifen (2) Längskanten (2A, 2B) umfasst, wobei die Flachröhre (1) ferner Folgendes umfasst: eine erste Wand (3), eine zweite Wand (4) parallel zu der ersten Wand (3), wobei die Wände (3, 4) im Wesentlichen flach sind, zwei komplementäre Seitenwandabschnitte (6), die die erste und die zweite Wand (3, 4) miteinander verbinden, wobei die erste Wand (3) eine Naht (5) umfasst, die sich entlang der Längsachse der Flachröhre (1) erstreckt, so dass nebeneinander liegende Längskanten (2A, 2B) des Metallstreifens (2) parallel in Richtung der zweiten Wand (4) miteinander verbunden werden, um ein geschlossenes Profil der Röhre (1) zu bilden, wobei die Naht (5) einen ersten Abschnitt (5A) und einen zweiten Abschnitt (5B) umfasst, die bezüglich des ersten Abschnitts der Naht (5) hintereinander angeordnet sind, wobei die Abschnitte (5A, 5B) von der zweiten Wand (4) beabstandet sind und sich entlang der Naht (5) entlang der Längsachse der Flachröhre (1) erstrecken, **dadurch gekennzeichnet, dass** die zweite Wand (4) mindestens eine Auslenkung (9) umfasst, die in Richtung der Naht (5) ragt, so dass der erste Abschnitt (5A) in Kontakt mit der zweiten Wand (4) ist, während der zweite Abschnitt (5B) von der zweiten Wand (4) beabstandet bleibt.

2. Flachröhre (1) nach Anspruch 1, wobei die Längskanten (2A, 2B) in Bezug auf die Oberfläche der zweiten Wand (4) auf der gleichen Höhe liegen.

3. Flachröhre (1) nach einem der vorhergehenden Ansprüche, wobei die Flachröhre (1) ein erstes offenes Ende (6A) und ein zweites offenes Ende (6B) umfasst, wobei sich der zweite Abschnitt (5B) in der Nähe von mindestens einem der offenen Enden (6A, 6B) befindet.

5. T

6. Flachröhre (1) nach einem der vorhergehenden Ansprüche, wobei die Auslenkung (9) in Form einer Nut (9A) ist, die sich kontinuierlich entlang der Naht (5) entlang der Längsachse der Flachröhre (1) erstreckt, sodass das abschließende Ende der Nut (9A), das am weitesten gegenüber der Oberfläche der zweiten Wand (4) verschoben ist, mindestens mit dem ersten Abschnitt (5A) ausgerichtet ist.

7. Flachröhre (1) nach einem der Ansprüche 1-4, wobei die Auslenkung (9) in einer Form von mindestens zwei Höckern (9B) ist, die entlang der Längsachse der Flachröhre (1) hintereinander angeordnet sind, so dass das abschließende Ende jedes Höckers (9B), das am weitesten gegenüber der Oberfläche der zweiten Wand (4) verschoben ist, mindestens mit dem ersten Abschnitt (5A) ausgerichtet ist.

8. Flachröhre (1) nach einem der vorhergehenden Ansprüche, wobei sich die Längskanten (2A, 2B) bis mindestens zur Hälfte des Abstands zwischen der ersten Wand (3) und der zweiten Wand (4) erstrecken, wobei der Abstand zwischen Innenflächen der Wände (3, 4) gemessen wird.

9. Flachröhre (1) nach dem vorhergehenden Anspruch, wobei sich die Längskanten (2A, 2B) im Wesentlichen um zwei Drittel des Abstands zwischen der ersten Wand (3) und der zweiten Wand (4) erstrecken.

10. Flachröhre (1) nach einem der vorhergehenden Ansprüche, wobei sich die Auslenkung (9) bis zu mindestens einem Viertel des Abstands zwischen der ersten Wand (3) und der zweiten Wand (4) erstreckt, wobei der Abstand zwischen Innenflächen der Wände (3, 4) gemessen wird.

11. Verfahren zum Bereitstellen einer Flachröhre nach Anspruch 1, das aus den folgenden Schritten besteht:
- Bereitstellen eines Metallstreifens
- Ausbilden der Auslenkung am Metallstreifen
- Walzen des Metallstreifens zu einem geschlossenen Profil
- Löten des gewalzten Metallstreifens.

12. Wärmetauscher (100), der mindestens eine Flachröhre (1) nach einem der Ansprüche 1-9 umfasst, wobei der Wärmetauscher (100) ferner Folgendes umfasst:
- einen ersten Verteiler (101),
- einen zweiten Verteiler (102), wobei die Flachröhre (1) dazu ausgelegt ist, eine Fluidverbindung zwischen den Verteilern (101, 102) bereitzustellen.

13. Wärmetauscher (100) nach Anspruch 11, wobei der Wärmetauscher (100) ferner mindestens eine Sekundärröhre (103) umfasst, wobei die Sekundärröhre (103) nur den ersten Abschnitt (5A) umfasst, der sich zwischen den offenen Enden davon erstreckt.

14. Wärmetauscher (100) nach einem der Ansprüche 11-12, wobei die Verteiler (101, 102) Schlitze (104) zum Aufnehmen zumindest der Flachröhren (1) umfassen, wobei sich der zweite Abschnitt (5B) auf beiden seiner Seiten durch und über den Umriss der Schlitze (104) hinaus erstreckt.

15. Wärmetauscher (100) nach Anspruch 11-13, wobei der Wärmetauscher (100) mindestens eine Rippe (105) umfasst, die zwischen einer der Flachröhren (1) oder Sekundärröhren (103) verschachtelt ist, wobei sich der zweite Abschnitt (5B) von dem Schlitz (104) mindestens zu dem Umriss erstreckt, der durch das abschließende Ende der Rippe (105) begrenzt ist.

## Revendications

1. Tube plat (1) pour un échangeur thermique (100) conçu pour qu'un fluide s'y écoule, le tube (1) étant formé en pliant une bande de plaque métallique (2) le long de sa longueur, la bande métallique (2) comprenant des bords longitudinaux (2A, 2B), le tube plat (1) comprenant en outre : une première paroi (3), une seconde paroi (4) parallèle à la première paroi (3), lesdites parois (3, 4) étant sensiblement plates, deux parties formant parois latérales complémentaires (6) reliant entre elles lesdites première et seconde parois (3, 4), la première paroi (3) comprenant un raccord (5) s'étendant le long de l'axe longitudinal du tube plat (1) de façon à ce que les bords longitudinaux (2A, 2B) juxtaposés de la bande métallique (2) se rejoignent parallèlement en direction de la seconde paroi (4) pour former un profil fermé du tube (1), le raccord (5) comprenant une première section (5A) et une seconde section (5B) agencées successivement relativement à la première partie du raccord (5), les sections (5A, 5B) étant espacées de la seconde paroi (4) et s'étendant le long du raccord (5) le long de l'axe longitudinal du tube plat (1), **caractérisé en ce que** la seconde paroi (4) comprend au moins une partie en relief (9) faisant saillie en direction du raccord (5), de telle sorte que la première section (5A) est en contact avec la seconde paroi (4) tandis que la seconde section (5B) reste espacée de la seconde paroi (4).

2. Tube plat (1) selon la revendication 1, dans lequel les bords longitudinaux (2A, 2B) sont au même niveau relativement à la surface de la seconde paroi (4).

3. Tube plat (1) selon l'une quelconque des revendications précédentes, le tube plat (1) comprenant une première extrémité ouverte (6A) et une seconde extrémité ouverte (6B), dans lequel la seconde section (5B) est située à proximité d'au moins une des extrémités ouvertes (6A, 6B).

5. T

6. Tube plat (1) selon l'une quelconque des revendications précédentes, dans lequel la partie en relief (9) se présente sous la forme d'une rainure (9A) s'étendant de façon continue le long du raccord (5), le long de l'axe longitudinal du tube plat (1), de telle sorte que l'extrémité terminale de la rainure (9A) qui est la plus décalée de la surface de la seconde paroi (4) est alignée au moins avec la première section (5A).

7. Tube plat (1) selon l'une quelconque des revendications 1 à 4, dans lequel la partie en relief (9) se présente sous la forme d'au moins deux proéminences (9B) agencées successivement le long de l'axe longitudinal du tube plat (1), de telle sorte que l'extrémité terminale de chaque proéminence (9B) qui est la plus décalée de la surface de la seconde paroi (4) est alignée au moins avec la première section (5A).

8. Tube plat (1) selon l'une quelconque des revendications précédentes, dans lequel les bords longitudinaux (2A, 2B) s'étendent au moins jusqu'à la moitié de la distance entre la première paroi (3) et la seconde paroi (4), dans lequel ladite distance est mesurée entre des faces intérieures des parois (3, 4).

9. Tube plat (1) selon la revendication précédente, dans lequel les bords longitudinaux (2A, 2B) s'étendent sensiblement sur deux tiers de la distance entre la première paroi (3) et la seconde paroi (4).

10. Tube plat (1) selon l'une quelconque des revendications précédentes, dans lequel la partie en relief (9) s'étend au moins jusqu'à un quart de la distance entre la première paroi (3) et la seconde paroi (4), dans lequel ladite distance est mesurée entre des faces intérieures des parois (3, 4).

11. Procédé de réalisation d'un tube plat selon la revendication 1 composé des étapes suivantes :
- préparer une bande métallique
- former la partie en relief sur la bande métallique
- profiler la bande métallique pour créer un profil fermé
- braser la bande métallique profilée.

12. Échangeur thermique (100) comprenant au moins un tube plat (1) selon l'une quelconque des revendications 1 à 9, l'échangeur thermique (100) comprenant en outre :
- un premier collecteur (101),
- un second collecteur (102), le tube plat (1) étant conçu pour assurer une communication fluidique entre les collecteurs (101, 102).

13. Échangeur thermique (100) selon la revendication 11, l'échangeur thermique (100) comprenant, en outre, au moins un tube secondaire (103), le tube secondaire (103) comprenant uniquement la première section (5A) s'étendant entre ses extrémités ouvertes.

14. Échangeur thermique (100) selon l'une quelconque des revendications 11 et 12, dans lequel les collecteurs (101, 102) comprennent des fentes (104) destinées à recevoir au moins les tubes plats (1), dans lequel la seconde section (5B) s'étend à travers et au-delà du contour des fentes (104) sur ses deux côtés.

15. Échangeur thermique (100) selon les revendications 11 à 13, l'échangeur thermique (100) comprenant au moins une ailette (105) insérée entre des tubes quelconques parmi les tubes plats (1) ou les tubes secondaires (103), dans lequel la seconde section (5B) s'étend de la fente (104) au moins jusqu'au contour délimité par l'extrémité terminale de l'ailette (105).
